# EUROPEAN PATENT SPECIFICATION

(11) **EP 1 315 369 B1**
(45) Date of publication and mention of the grant of the patent: **30.05.2012**
(21) Application number: 02257419.8
(22) Date of filing: 25.10.2002
(51) Int. Cl.: H04N 5/232

(54) **User-configurable electronic apparatus**
Benutzer-konfigurierbare elektronische Vorrichtung
Appareil électronique configurable par l'utilisateur

(30) Priority: 29.10.2001 KR 2001066849
(43) Date of publication of application: 28.05.2003
(73) Proprietor: Samsung Electronics Co., Ltd., Suwon-si, Gyeonggi-do 442-742 (KR)
(72) Inventor: Seo, Byung-ryul, Yongin-city, Gyunggi-do (KR)
(74) Representative: Walaski, Jan Filip

(56) References cited:
- EP-A- 0 746 152
- EP-A- 0 878 962
- EP-A- 0 907 098
- JP-A- 2001 211 368
- US-A- 5 485 200
- US-A- 5 995 101
- PATENT ABSTRACTS OF JAPAN vol. 017, no. 241 (E-1364), 14 May 1993 (1993-05-14) & JP 04 368081 A (FUJI PHOTO FILM CO LTD), 21 December 1992 (1992-12-21)

## Description

The present invention generally relates to a user-configurable electronic apparatus comprising a display, user input means and control means.

Generally, when an operator of an electronic appliance, such as a camera, camcorder or television, wants to select a desired function, he or she needs to check and adjust the operation or control status of the appliance. For this purpose, conventional appliances typically include a control panel and a key input portion which enables the operator to control the electronic appliance as desired. That is, the operator inputs a command by manipulating a key input portion, while checking the operation and control status of the appliance on, for example, a display window.

Recently, as customers' demands for more compact appliances of elegant design has increased and there has been increasing requirements for fewer physical buttons on devices. However, an appliance having complicated functions generally requires a great number of buttons for enabling an operator to select the numerous functions that the appliance is capable of performing. This need to increase the functionality of appliances while also minimizing the number of control buttons not only results in complex designs but also limits the scope of design and increases material costs. On-screen display (OSD) menus have been developed to replace the physical buttons in order to solve the aforementioned problems.

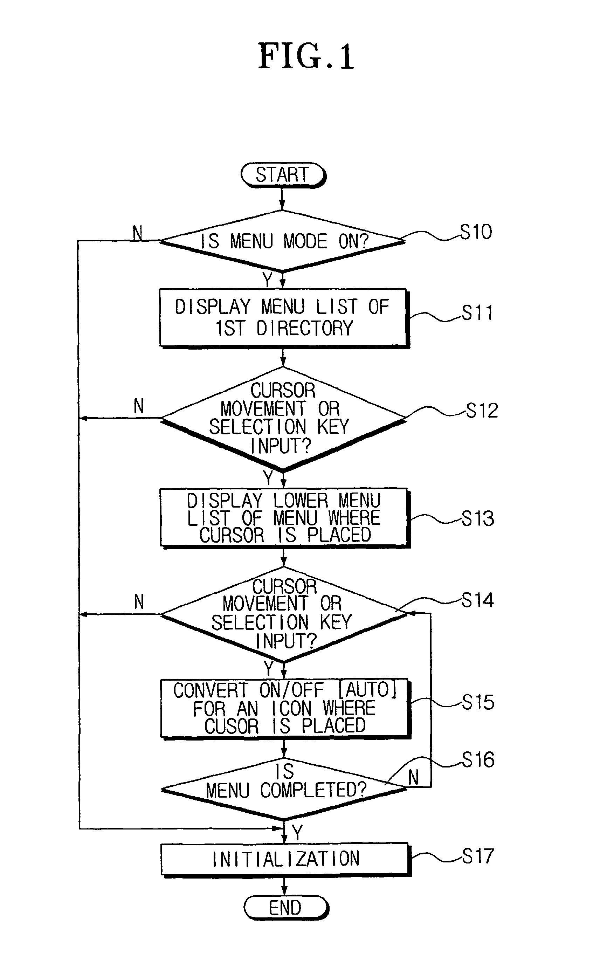

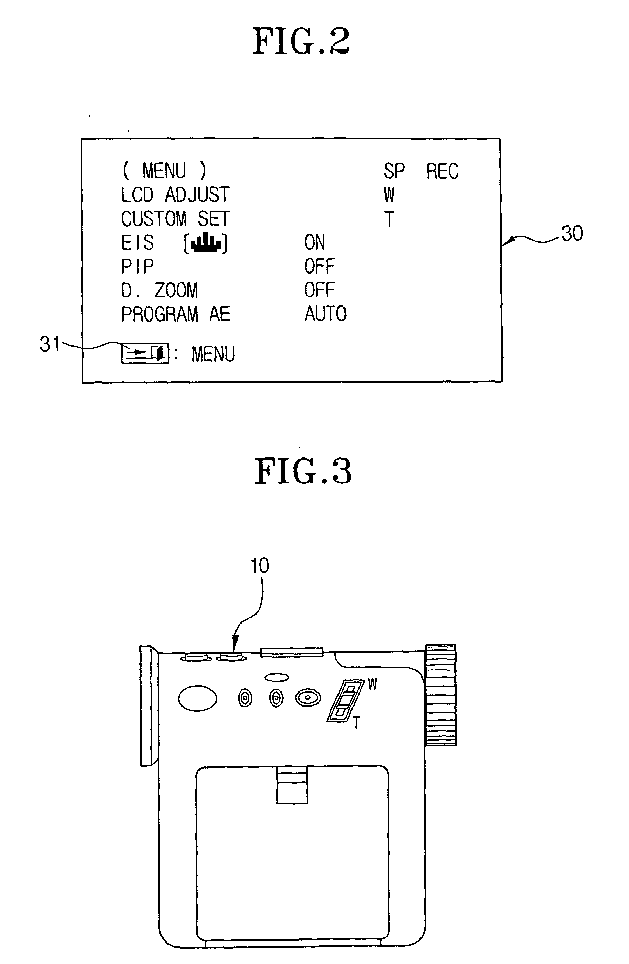

Figure 1 is a flowchart showing an example of a method for changing a configuration parameter of an appliance using a conventional OSD menu, and Figure 2 is a view showing a display portion displaying a menu.

As shown in Figures 1 and 2, to change a configuration parameter of a function of the appliance, the operator manipulates the control panel and turns the menu mode on in step S10. When the menu mode is turned on, the top level menu is displayed in step S11. In order to change the configuration of one or more sub-functions, relating to the functions indicated in the top level menu, the operator moves a cursor 31 to the menu item that relates to the function he or she wants to reconfigure, and selects a corresponding lower menu, commonly referred to as a "drop down menu", by manipulating the key input portion in step S12. After step S12, a lower menu is displayed on the screen proximate to where the cursor 31 is positioned. Accordingly, the operator moves the cursor 31 to the desired function in the lower menu and can turn that function on or off, for example, by manipulating the selection key as desired in steps S13, S14 and S15.

As mentioned above, Figure 2 shows an example of a portion of the display screen where the conventional OSD is displayed. As discussed, the operator changes the configuration of a desired function by moving from the top level menu mode to a lower menu, moving the cursor 31 to the desired function, and then manipulating the key input portion to turn that function on or off for example.

As can be appreciated from the processes described above, if the operator wants to change the configuration of one function, he or she has to start from the first step S10 and go through all of the steps. In order for the operator to change the configuration of a function, e.g. turn it on or off, without having to go through all of these complicated steps, the appliance employs an external key input portion 10 as shown in Figure 3 which can act as a shortcut key to turn a designated function on or off.

Also, in order to turn a function on or off using the OSD menu displayed on the screen of, for example, a television or a camcorder displaying captured images, the operator has to have the OSD menu displayed on the screen that he or she is watching. Then, the operator has to go through the complicated process of moving from the top menu to the lower menu and turning the function off or on as desired.

Accordingly, the operator has to go through the complicated processes in the middle of shooting or watching pictures even to perform a simple operation such as turning a desired function on or off. Also, since the operator has to have the menu screen displayed on the screen that he or she has been watching, the initial screen is covered and thus obstructed by the menu screen.

Furthermore, when the OSD menu mode is used in an electronic appliance having complicated functions, the operator has to endure the inconvenience of having to go through complicated processes for function selection and manipulation. Moreover, even though the appliance can include external physical buttons to make configuring of a particular function more convenient for the operator, the addition of one or more of such physical buttons makes the appliance more complicated, while also limiting the scope of its design and increasing the material cost for manufacture, thus increasing the overall cost of the appliance.

EP0907098 describes a digital camera having an image/character superposition display function.

EP0878962 describes a camera in which a user looks at images appearing on a headset display to monitor and verify recorded images without recourse to a view finder of the video camera.

US 5,485,200 describes an operational information renewing and memorising apparatus and a method for a photographing instrument.

US 5,995,101 describes a graphical user interface for use in a graphical display on a computer monitor and includes a cursor allowing a user to point to an area of interest in the graphical display.

JP 2001-211368 discloses a digital camera having a monitor which displays a menu bar for various input settings and a menu balloon of a sub menu on an onscreen display. A user selects a desirable menu item by operating the cross key.

JP 2004-368081 describes a menu pattern on which titles and icons corresponding to various functions are arranged to the left and right sides of a view finder. A cursor is moved freely in two dimensions on the menu pattern.

A user-configurable electronic apparatus according to the present invention is defined by claim 1 appended hereto.

According to the invention, there is also provided a method of configuring the functions of a user-configurable electronic apparatus according to claim 13. appended hereto.

Preferably, the control means is configured for causing the display to display a plurality of icons representing respective functions of the apparatus and a cursor and, in response to operation of the user input means, to move the cursor to select one of said icons and to change the configuration of the function represented by said selected icon.

Preferably, the control means is configured to cause the display to display a selected icon in a manner dependent on the configuration of the function represented thereby.

Preferably, the control means is configured to cause the display to display a textual indication of the function associated with a selected icon and the configuration state of said function.

Preferably, there is a source of image signals and the control means is configured to cause the display to display images on the display in dependence on signals from the source of image signals behind the or each icon. More preferably, the or each icon is located in the margin of the display.

The source of image signals may be an image sensor as in a camcorder or a video or television signal input port.

An embodiment of the present invention will now be described, by way of example, with reference to Figures 4 to 7B of the accompanying drawings, in which:
Figure 1 is a flowchart illustrating a method of configuring a function using a conventional on-screen display (OSD);
Figure 2 is a schematic view showing a screen displaying a conventional OSD menu;
Figure 3 is a schematic view showing an appliance having a conventional input button for configuring a function of the electronic appliance;
Figure 4 is a block diagram schematically showing an example of a configuration apparatus for an electronic appliance according to the present invention;
Figure 5 is a flowchart showing an example of the operations performed by the function configuration apparatus shown in Figure 4; and
Figures 6, 7A and 7B are views schematically showing examples of items displayed on a screen displayed as a result of the operations shown in Figure 5.

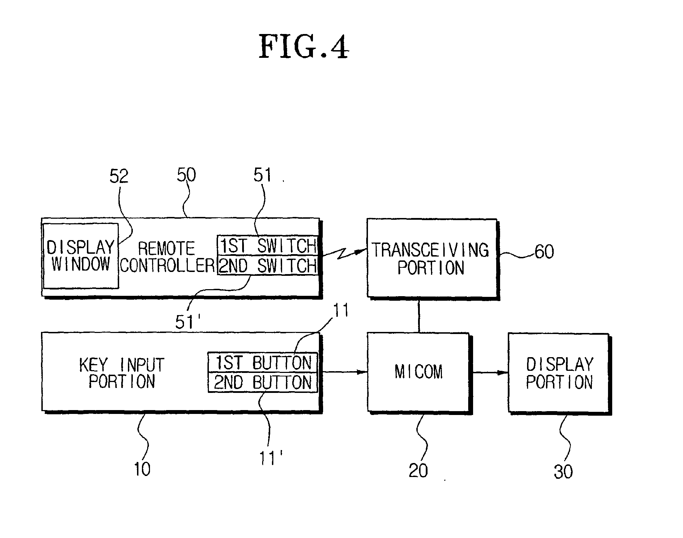

Referring to Figure 4, a function configuration apparatus according to the present invention includes a key input portion 10, having an control panel (not shown) mounted in an electronic appliance for function selection and/or operational adjustment, first and second switches 11, 11' in the key input portion 10, a display portion 30 for displaying an on-screen display (OSD) including icons representing functions and/or states of the appliance, and a control portion 20 for interacting with the respective key input and display portions. In addition, a remote controller 50 can be provided for inputting operator commands to the electronic appliance by means of first and second buttons 51, 51' which output signals from the remote controller 50. The remote controller 50 further includes a display window 52. The apparatus further includes a transceiving portion 60 for transferring signals between the remote controller 50 and the control portion 20.

In this example, the first and the second switches 11, 11' are formed in the key input portion 10 of the control panel, with the first switch 11 outputting a signal for moving the cursor 31 on the display screen and the second switch 11' outputting a signal for changing the status of a function between on and off states. The first and the second switches 11, 11' can be formed separately. Alternatively, the first and the second switches 11, 11' can be formed as a dial button, such that when the dial button is turned, the signal of the first switch 11 is output, and when the dial button is pushed, the signal of the second switch 11' is output.

The display portion 30 for displaying the functions and operational status of the electronic appliance can comprise a liquid crystal display (LCD) mounted in the control panel (not shown). Also, for a television, the display portion 30 can be the screen on which complex image signals (e.g., a television picture) are displayed. For a camcorder, the display portion 30 can be the screen on which the scene being captured and the recorded image are displayed. The display portion 30 further displays on the screen one or more icons 32 representing plural functions and operational states of the electronic appliance, along with the cursor 31 that can move on the screen according to the signals provided by the first switch 11 or first button 51, and text representing, for example, the date, operational states of the appliance, and so on.

Referring to Figure 4, the key input portion 10 and the display portion 30 are connected to the control portion 20. The control portion 20 controls the functions of the electronic appliance according to the signals input from the key input portion 10, and provides to the display portion 30 with the corresponding OSD signals. If the electronic appliance is provided with a remote controller 50, signals for cursor movement and function selection can also be provided by manipulation of the first and the second buttons 51, 51' respectively. The operator can monitor the functions being selected and changed by the manipulation of the first and the second buttons 51 and 51' on the display window because the remote controller 50 is provided with a display window 52.

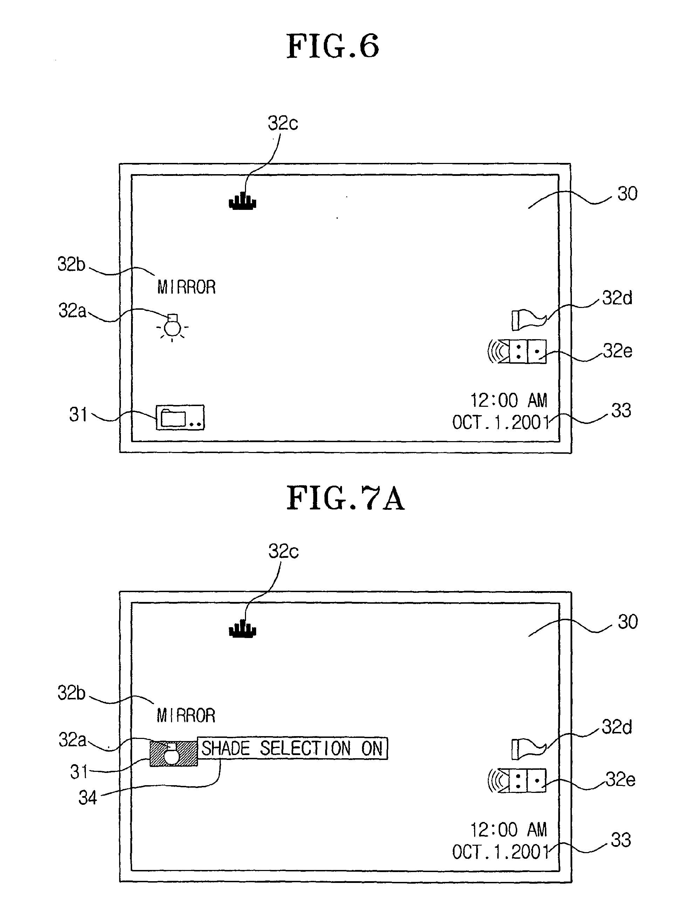

Referring to Figure 6, the screen is displaying the icons 32, the cursor 31, and date/time 33. The icons take characteristic forms according to the options available and can be in the form of text-like icons 32b or symbolic icons 32a, 32c, 32d, 32e (icons 32a-32e will be referred to generically as icons 32). The icons 32 are set at predetermined locations on the screen according to the options available and, thus, the icons 32 are controlled indicate the on or off state of the associated functions. During the initialisation, when the appliance is turned on, the cursor 31 is displayed at a predetermined location on the screen, and moves from its initial position according to the manipulation on the first switch 11.

The off-state of a function can be represented by 'AUTO', which means the off-status can be selected automatically under the control of the control portion 20. Furthermore, the display portion 30 can display the icons on the display screen in a function on state when the OSD is turned on, and in a function off state when the OSD is turned off.

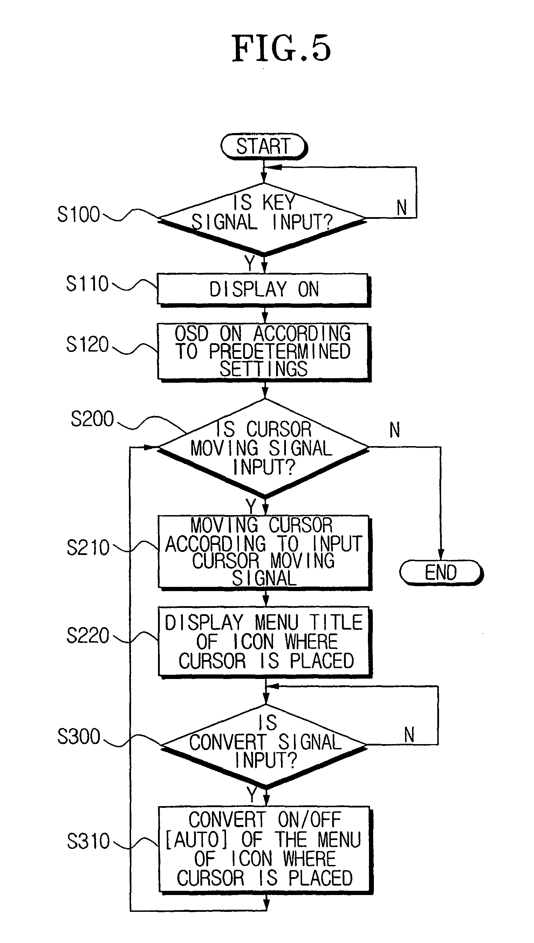

An example of function configuration performed by the electronic appliance will now be described in greater detail with reference to Figures 5 to 7B.

When the operator manipulates the key input portion 10 and thus inputs a corresponding key signal in step S100, the display portion 30 is turned on, step S110. With the display portion 30 turned on, the OSD is turned on accordance with predetermined values for the different options, and the icons 32, the cursor 31, and date/time are displayed on the display portion 30 in step S120. Then, if the first switch 11 is manipulated, the signal for cursor movement is input, step S200, and the control portion 20 moves the cursor 31 according to the input signals, step S210. When the cursor 31 is placed on or proximate to an icon 32, the on state is represented in a reversed image and the off state is represented by flickering or light shading. The titles of the options represented by the icons 32 can be indicated by a tool tip 34, which can be displayed during step S220. Hence, the title of the option represented by the icon, and the on or off state is thus indicated by the manner in which the relevant icon 32 is displayed. When a signal for function configuration is input in step S300, with the cursor 31 is placed on a certain icon 32, the function of the appliance represented by that particular icon 32 is switched on or off as desired, step S310.

In the case that the appliance is a camcorder, the operator repeatedly checks the image displayed on the screen, during shooting. In a camcorder employing an embodiment of the present invention as described above, the icons 32 representing the set functions and the cursor 31 are displayable on the screen. Also, in this example, the icons 32 and the cursor 31 are displayed in the corners and at the edges of the screen, so that they do not obscure the scene being captured by the camcorder. In Figure 6, icon 32a represents a shade selection function, icon 32b represents a special effect (DSE) function, icon 32c represents a hand-tremor compensation (EIS) function and icon 32d represents a wind sound removal function, all of which are in the on state. During initialization, the cursor 31 is placed at a side of the screen. Also, if the date/time 33 are pre-set, the date and time 33 are displayed on the screen.

In this example, the shade selection 32a can be converted to an automatic state by manipulating the first switch 11 and thus moving the cursor 31 to the shade selection icon 32a. The used can then manipulate the second switch 11' to shift the state of the shade selection function as desired. During this process, the operator can still check the images being shot and does not have to initiate an OSD display as in the conventional apparatus.

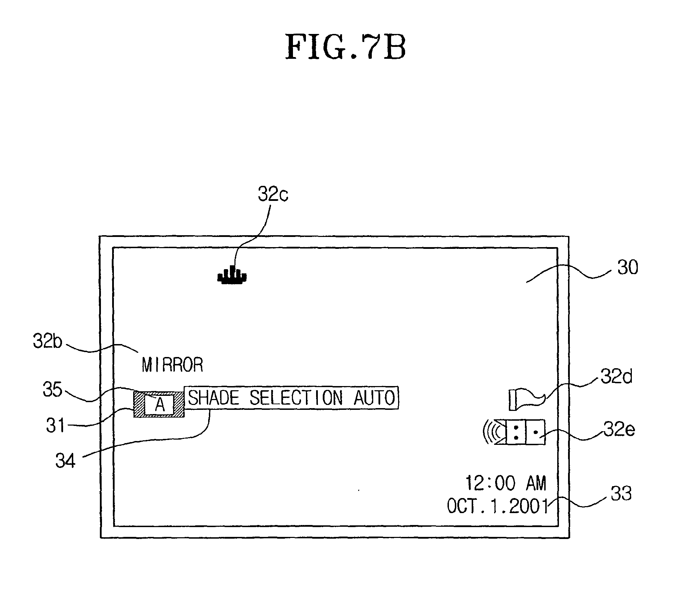

Referring to Figures 7A and 7B, when the operator manipulates the first switch 11, the signal for cursor movement is input into the control portion 20. The control portion 20 accordingly moves the cursor 31 as shown in Figure 7A. When the cursor 31 is placed on icon 32a, the shade selection icon 32a is reversed, and the option title "shade selection" of the shade selection icon 32a and the current state of the function, i.e. 'ON' are displayed in as a tool tip 34.

Accordingly, when the function configuration signal is input into the control portion 20 by manipulation of the second switch 11' with the cursor 31 on the shade selection icon 32a, the shade selection option is changed from the ON state to the AUTO state and, accordingly, the icon 32a is displayed on the screen as a new icon, which is the AUTO-icon 35. The tip-box 34 also indicates 'AUTO' instead of 'ON'.

As can be appreciated from the above description of an embodiment of present invention, the state of the function settings of the electronic appliance are displayed in the form of icons 32 while the originally-displayed images continue to be displayed. Accordingly, the operator can change the state of a function of the electronic appliance by simply moving the cursor 31 to a desired icon 32 and performing a simple manipulation.

Also, in order to avoid the situation that the display of icons 32 covers the originally-displayed image, the icons are arranged at the corner of the screen. However, the icons 32 can be displayed at any desired location as deemed appropriate by the manufacturer of the appliance.

According to the disclosed embodiments of the present invention, the operator does not have to repeat the complicated process of entering into the OSD option mode and finding a corresponding directory to shift the function of the electronic appliance. As the icons representing the respective functions are displayed together with the currently-displayed screen, the operator can easily set a desired function by moving the cursor 31 among the icons.

## Claims

1. A user-configurable electronic apparatus comprising a display (30), user input means and control means (20), wherein the control means is configured for causing the display (30) to display an icon (32a, 32b, 32c, 32d, 32e) representing a current functional state of the apparatus and a cursor (31) and, in response to operation of the user input means, to move the cursor (31) to select said icon (32a, 32b, 32c, 32d, 32e) and to change the configuration of the functional state represented by said icon (32a, 32b, 32c, 32d, 32e);
wherein the user input means is a switch apparatus (11, 11', 51, 51'), adapted to output a first signal for moving the cursor and a second signal for changing the configuration of the functional state by switching the functional state represented by the icon selected by the cursor; and
wherein the apparatus comprises an image sensor for recording video, wherein the apparatus is arranged to display the cursor (31) and the icon, and select and change a function represented by the icon, at the same time as the scene being captured as video and the recorded image displayed, and
the control means is further configured to switch the configuration in accordance with the second output signal only, and
when the cursor is located at a specific symbolic icon, the control means controls to change a functional state of the apparatus by the second signal only, and
the control means controls to display a tool tip (34) comprising a textual indication of a title and the functional state represented by the icon, when the cursor is located at said specific symbolic icon.

2. An apparatus according to claim 1, wherein the control means (20) is configured for causing the display (30) to display a plurality of icons (32a, 32b, 32c, 32d, 32e) representing respective current functional states of the apparatus and a cursor (31) and, in response to operation of the user input means, to move the cursor (31) to select one of said icons (32a, 32b, 32c, 32d, 32e) and to change the configuration of the functional state represented by said selected icon (32a, 32b, 32c, 32d, 32e).

3. An apparatus according to claim 1 or 2, wherein the control means is configured to cause the display (30) to display a selected icon (32a, 32b, 32c, 32d, 32e) in a manner dependent on the on/off state of the function represented thereby.

4. An apparatus according to claim 3, wherein the control means (20) is configured to cause the display (30) to display the selected icon (32a, 32b, 32c, 32d, 32e) such that when the function represented thereby is in the off state, the selected icon (32a, 32b, 32c, 32d, 32e) flickers or has light shading.

5. An apparatus according to claim 3 or 4, wherein the control means (20) is configured to cause the display (30) to display the selected icon (32a, 32b, 32c, 32d, 32e) such that when the function represented thereby is in the on state, the selected icon (32a, 32b, 32c, 32d, 32e) is represented in a reversed image.

6. An apparatus according to any preceding claim, including a source of image signals, wherein the control means (20) is configured to cause the display (30) to display images in dependence on signals from the source of image signals behind the or each icon (32a, 32b, 32c, 32d, 32e).

7. An apparatus according to claim 6, wherein the or each icon (32a, 32b, 32c, 32d, 32e) is located in the margin of the display (30).

8. An apparatus according to claim 1, wherein the switch apparatus (11, 11', 51, 51') is formed as a dial button, such that the first signal is output when the dial button is turned, and the second signal is output when the dial button is pushed.

9. An apparatus according to claim 1, wherein the switch apparatus (11,11', 51, 51') comprises:
a first switch (11, 11'), adapted to output the first signal; and
a second switch (51, 51'), adapted to output the second signal.

10. An apparatus according to claim 1, wherein:
the switch apparatus (11,11',51,51') is disposed on the electronic apparatus.

11. An apparatus according to claim 1, wherein:
the switch apparatus (11,11',51,51') is configured as a remote control unit (50) adapted for use with the electronic apparatus.

12. An apparatus according to claim 1, wherein:
the control means (20) is configured to change the configuration of the functional state between the on condition and one of an off condition or an automatic condition according to the second output signal.

13. A method of configuring the functions of a user-configurable electronic apparatus which comprises a display (30), user input means and control means (20), the method **characterised by** the steps of:
causing the display (30) to display an icon (32a, 32b, 32c, 32d, 32e) representing a current functional state of the apparatus and a cursor (31); responding to operation of the user input means, to move the cursor (31) to select said icon (32a, 32b, 32c, 32d, 32e) and
changing the configuration of the functional state represented by said icon (32a, 32b, 32c, 32d, 32e), and
outputting from the user input means, which is a switch apparatus (11, 11', 51, 51'), a first signal for moving the cursor and a second signal for changing the configuration of the functional state by switching the functional state represented by the icon selected by the cursor; and
wherein the apparatus comprises an image sensor for recording video, and displaying the cursor (31) and the icon, and selecting and changing a function represented by the icon, at the same time as the scene being captured as video and the recorded image displayed, and
switching the configuration in accordance with the second output signal only, and
when the cursor is located at a specific symbolic icon, the control means controlling a change of a functional state of the apparatus by the second signal only, and
displaying a tool tip (34) comprising a textual indication of a title and the functional state represented by the icon.

14. A method according to claim 13, comprising causing the display (30) to display a selected icon (32a, 32b, 32c, 32d, 32e) in a manner dependent on the on/off state of the function represented thereby.

15. A method according to claim 13, comprising:
causing the display (30) to display a plurality of icons (32a, 32b, 32c, 32d, 32e) representing respective functional states of the apparatus and a cursor (31),
responding to operation of the user input means, to move the cursor (31) to select one of said icons (32a, 32b, 32c, 32d, 32e) and
changing the configuration of the functional state represented by said selected icon (32a, 32b, 32c, 32d, 32e).

16. A method according to any one of claims 13 to 15, comprising:
causing the display (30) to display the selected icon (32a, 32b, 32c, 32d, 32e) such that when the functional state represented thereby is in the off state, the selected icon (32a, 32b, 32c, 32d, 32e) flickers or has light shading.

17. A method according to any one of claims 13 to 16, comprising:
causing the display (30) to display the selected icon (32a, 32b, 32c, 32d, 32e) such that when the functional state represented thereby is in the on state, the selected icon (32a, 32b, 32c, 32d, 32e) is represented in a reversed image.

18. A method according to any one of claims 13 to 17, including generating source image signals, and causing the display (30) to display images in dependence on signals from the source of image signals behind the or each icon (32a, 32b, 32c, 32d, 32e).

19. A method according to claim 18, including locating the or each icon (32a, 32b, 32c, 32d, 32e) in the margin of the display (30).

20. A method according to claim 13, wherein the switch apparatus (11, 11', 51, 51') is formed as a dial button, and the method comprises outputting the first signal when the dial button is turned, and the second signal is output when the dial button is pushed.

21. A method according to claim 13, comprising
changing the configuration of the functional state between the on condition and one of an off condition or an automatic condition according to the second output signal.

## Patentansprüche

1. Benutzerkonfigurierbare elektronische Vorrichtung, bestehend aus einer Anzeige (30), Benutzereingabe- und Steuerungseinrichtung (20), wobei die Steuerungseinrichtung konfiguriert ist, dass die Anzeige (30) ein Symbol (32a, 32b, 32c, 32d, 32e) anzeigt, das einen aktuellen Funktionszustand der Vorrichtung repräsentiert, und einen Cursor (31) und, in Reaktion auf die Betätigung der Benutzereingabeeinrichtung, dass der Cursor (31) bewegt wird, um besagtes Symbol (32a, 32b, 32c, 32d, 32e) auszuwählen und die Konfiguration des durch das besagte Symbol (32a, 32b, 32c, 32d, 32e) repräsentierten Funktionszustandes zu ändern;
wobei die Benutzereingabeeinrichtung eine Schaltvorrichtung (11, 11', 51, 51') ist,
die angepasst ist für die Ausgabe eines ersten Signals für die Bewegung des Cursors und eines zweiten Signals für die Änderung der Konfiguration des Funktionszustandes durch Schalten des Funktionszustandes, der durch das durch den Cursor ausgewählte Symbol repräsentiert wird; und
wobei die Vorrichtung einen Bildsensor beinhaltet für die Aufnahme von Video, wobei die Vorrichtung angeordnet ist, um den Cursor (31) und das Symbol anzuzeigen und eine durch das Symbol repräsentierte Funktion auszuwählen und zu ändern, zeitgleich mit der Erfassung der Szene als Video und Anzeige des aufgenommenen Bildes, und
die Steuerungseinrichtung ferner konfiguriert ist, dass die Konfiguration nur in Übereinstimmung mit dem zweiten Ausgabesignal geschaltet wird, und,
wenn der Cursor bei einem bestimmten Symbol positioniert ist, die Steuerungseinrichtung steuert, um einen Funktionszustand der Vorrichtung nur durch das zweite Signal zu ändern, und
die Steuerungseinrichtung steuert, um einen Tool-Tipp (34) anzuzeigen, bestehend aus einer textlichen Anzeige eines Titels und des durch das Symbol repräsentierten Funktionszustandes, wenn der Cursor am besagten, bestimmten Symbol positioniert ist.

2. Vorrichtung nach Anspruch 1, wobei die Steuerungseinrichtung (20) konfiguriert ist, dass die Anzeige (30) eine Anzahl von Symbolen (32a, 32b, 32c, 32d, 32e) anzeigt, die entsprechende aktuelle Funktionszustände der Vorrichtung repräsentieren, und einen Cursor (31) und, in Reaktion auf die Betätigung der Benutzereingabeeinrichtung, dass der Cursor (31) bewegt wird, um eines der besagten Symbole (32a, 32b, 32c, 32d, 32e) auszuwählen und die Konfiguration des durch das besagte, ausgewählte Symbol (32a, 32b, 32c, 32d, 32e) repräsentierten Funktionszustandes zu ändern;

3. Vorrichtung nach Anspruch 1 oder 2, wobei die Steuerungseinrichtung konfiguriert ist, dass die Anzeige (30) ein ausgewähltes Symbol (32a, 32b, 32c, 32d, 32e) in einer vom Ein-/Aus-Zustand der damit repräsentierten Funktion abhängigen Weise anzeigt.

4. Vorrichtung nach Anspruch 3, wobei die Steuerungseinrichtung (20) konfiguriert ist, dass die Anzeige (30) das ausgewählte Symbol (32a, 32b, 32c, 32d, 32e) so anzeigt, dass, wenn die damit repräsentierte Funktion im Aus-Zustand ist, das ausgewählte Symbol (32a, 32b, 32c, 32d, 32e) flackert oder Lichtschattierung hat.

5. Vorrichtung nach Anspruch 3 oder 4, wobei die Steuerungseinrichtung (20) konfiguriert ist, dass die Anzeige (30) das ausgewählte Symbol (32a, 32b, 32c, 32d, 32e) so anzeigt, dass, wenn die damit repräsentierte Funktion im Ein-Zustand ist, das ausgewählte Symbol (32a, 32b, 32c, 32d, 32e) in einem umgekehrten Bild repräsentiert wird.

6. Vorrichtung nach einem der vorhergehenden Ansprüche, einschließlich einer Quelle von Bildsignalen, wobei die Steuerungseinrichtung (20) konfiguriert ist, dass die Anzeige (30) Bilder in Abhängigkeit von Signalen von der Quelle von Bildsignalen hinter dem oder jedem Symbol (32a, 32b, 32c, 32d, 32e) anzeigt.

7. Vorrichtung nach Anspruch 6, wobei das oder jedes Symbol (32a, 32b, 32c, 32d, 32e) im Rand der Anzeige (30) positioniert ist.

8. Vorrichtung nach Anspruch 1, wobei die Schaltvorrichtung (11, 11', 51, 51') als eine Wähltaste ausgebildet ist, so dass das erste Signal ausgegeben wird, wenn die Wähltaste gedreht wird, und das zweite Signal ausgegeben wird, wenn die Wähltaste gedrückt wird.

9. Vorrichtung nach Anspruch 1, wobei die Schaltvorrichtung (11,11', 51, 51') umfasst:
einen ersten Schalter (11, 11'), der angepasst ist für die Ausgabe des ersten Signals; und
einen zweiten Schalter (51, 51'), der angepasst ist für die Ausgabe des zweiten Signals.

10. Vorrichtung nach Anspruch 1, wobei:
die Schaltvorrichtung (11,11',51,51') an der elektronischen Vorrichtung angeordnet ist.

11. Vorrichtung nach Anspruch 1, wobei:
die Schaltvorrichtung (11,11',51,51') als eine Fernsteuerungseinheit (50) konfiguriert ist, die für den Einsatz mit der elektronischen Vorrichtung angepasst ist.

12. Vorrichtung nach Anspruch 1, wobei:
die Steuerungseinrichtung (20) konfiguriert ist, um die Konfiguration des Funktionszustandes zwischen dem Ein-Zustand und einem eines Aus-Zustands oder einem automatischen Zustand in Übereinstimmung mit dem zweiten Ausgabesignal zu ändern.

13. Ein Verfahren für die Konfiguration der Funktionen einer benutzerkonfigurierbaren elektronischen Vorrichtung, bestehend aus einer Anzeige (30), Benutzereingabe- und Steuerungseinrichtung (20), wobei das Verfahren durch folgende Schritte **gekennzeichnet** ist:
Verursachung, dass die Anzeige (30) ein Symbol (32a, 32b, 32c, 32d, 32e) anzeigt, das einen aktuellen Funktionszustand der Vorrichtung repräsentiert, und einen Cursor (31) und, in Reaktion auf die Betätigung der Benutzereingabeeinrichtung, dass der Cursor (31) bewegt wird, um besagtes Symbol (32a, 32b, 32c, 32d, 32e) auszuwählen und
Änderung der Konfiguration des durch das besagte Symbol (32a, 32b, 32c, 32d, 32e) repräsentierten Funktionszustandes und
Ausgabe von der Benutzereingabeeinrichtung, die eine Schaltvorrichtung (11, 11', 51, 51') ist, eines ersten Signals für die Bewegung des Cursors und eines zweiten Signals für die Änderung der Konfiguration des Funktionszustandes durch Schalten des Funktionszustandes, der durch das durch den Cursor ausgewählte Symbol repräsentiert wird; und
wobei die Vorrichtung einen Bildsensor beinhaltet für die Aufnahme von Video, und Anzeige des Cursors (31) und des Symbols und Auswahl und Änderung einer durch das Symbol repräsentierten Funktion, zeitgleich mit der Erfassung der Szene als Video und Anzeige des aufgenommenen Bildes, und
Schaltung der Konfiguration nur in Übereinstimmung mit dem zweiten Ausgabesignal, und,
wenn der Cursor an einem bestimmten Symbol positioniert ist, Steuerung mittels Steuerungseinrichtung einer Änderung eines Funktionszustandes der Vorrichtung nur durch das zweite Signal, und
Anzeige eines Tool-Tipps (34), bestehend aus einer textlichen Anzeige eines Titels und des durch das Symbol repräsentierten Funktionszustandes.

14. Ein Verfahren nach Anspruch 13, bestehend aus der Verursachung, dass die Anzeige (30) ein ausgewähltes Symbol (32a, 32b, 32c, 32d, 32e) in einer vom Ein-/Aus-Zustand der damit repräsentierten Funktion abhängigen Weise anzeigt.

15. Ein Verfahren nach Anspruch 13, bestehend aus:
Verursachung, dass die Anzeige (30) eine Anzahl von Symbolen (32a, 32b, 32c, 32d, 32e) anzeigt, die entsprechende Funktionszustände der Vorrichtung repräsentieren, und einen Cursor (31),
in Reaktion auf die Betätigung der
Benutzereingabeeinrichtung, um den Cursor (31) zu bewegen, um eines der besagten Symbole (32a, 32b, 32c, 32d, 32e) auszuwählen, und
Änderung der Konfiguration des durch das besagte, ausgewählte Symbol (32a, 32b, 32c, 32d, 32e) repräsentierten Funktionszustandes.

16. Ein Verfahren nach einem der Ansprüche 13 bis 15, bestehend aus:
Verursachung, dass die Anzeige (30) das ausgewählte Symbol (32a, 32b, 32c, 32d, 32e) so anzeigt, dass, wenn der damit repräsentierte Funktionszustand im Aus-Zustand ist, das ausgewählte Symbol (32a, 32b, 32c, 32d, 32e) flackert oder Lichtschattierung hat.

17. Ein Verfahren nach einem der Ansprüche 13 bis 16, bestehend aus:
Verursachung, dass die Anzeige (30) das ausgewählte Symbol (32a, 32b, 32c, 32d, 32e) so anzeigt, dass, wenn der damit repräsentierte Funktionszustand im Ein-Zustand ist, das ausgewählte Symbol (32a, 32b, 32c, 32d, 32e) in einem umgekehrten Bild repräsentiert wird.

18. Ein Verfahren nach einem der Ansprüche 13 bis 17, einschließlich Erzeugung einer Quelle von Bildsignalen und Verursachung, dass die Anzeige (30) Bilder in Abhängigkeit von Signalen von der Quelle von Bildsignalen hinter dem oder jedem Symbol (32a, 32b, 32c, 32d, 32e) anzeigt.

19. Ein Verfahren nach Anspruch 18, einschließlich Positionierung des oder jeden Symbols (32a, 32b, 32c, 32d, 32e) im Rand der Anzeige (30).

20. Ein Verfahren nach Anspruch 13, wobei die Schaltvorrichtung (11, 11', 51, 51') als eine Wähltaste ausgebildet ist, und das Verfahren Ausgabe des ersten Signals beinhaltet, wenn die Wähltaste gedreht wird, und des zweiten Signals, wenn die Wähltaste gedrückt wird.

21. Ein Verfahren nach Anspruch 13, bestehend aus:
Änderung der Konfiguration des Funktionszustandes zwischen dem Ein-Zustand und einem eines Aus-Zustands oder einem automatischen Zustand in Übereinstimmung mit dem zweiten Ausgabesignal.

## Revendications

1. Appareil électronique configurable par l'utilisateur, comprenant un affichage (30), un moyen de saisie par l'utilisateur et un moyen de commande (20), ce moyen de commande étant configuré de façon à faire afficher par l'affichage (30) une icône (32a, 32b, 32c, 32d, 32e) représentant un état de fonctionnement courant de l'appareil et un curseur (31) et, en réponse à l'utilisation du moyen de saisie par l'utilisateur, à déplacer le curseur (31) pour sélectionner ladite icône (32a, 32b, 32c, 32d, 32e) et pour changer la configuration de l'état de fonctionnement représenté par ladite icône (32a, 32b, 32c, 32d, 32e) ;
dans lequel le moyen de saisie par l'utilisateur est un appareil de permutation (11, 11', 51, 51'), adapté de façon à émettre un premier signal pour déplacer le curseur et un deuxième signal pour changer la configuration de l'état de fonctionnement en permutant l'état de fonctionnement représenté par l'icône sélectionnée par le curseur ; et
cet appareil comprenant un capteur d'image pour enregistrer une vidéo, l'appareil étant agencé de façon à afficher le curseur (31) et l'icône, et à sélectionner et changer une fonction représentée par l'icône, alors que la scène est capturée en même temps comme vidéo et que l'image enregistrée est affichée, et
le moyen de commande étant configuré en outre de façon à permuter la configuration en fonction du deuxième signal de sortie seulement, et
lorsque le curseur est situé sur une icône symbolique spécifique, le moyen de commande commandant le changement d'un état de fonctionnement de l'appareil par le deuxième signal seulement, et
le moyen de commande commandant l'affichage d'une infobulle (34) comprenant une indication textuelle d'un titre et de l'état de fonctionnement représenté par l'icône, lorsque le curseur est situé sur ladite icône symbolique spécifique.

2. Appareil selon la revendication 1, dans lequel le moyen de commande (20) est configuré de façon à faire afficher par l'affichage (30) une pluralité d'icônes (32a, 32b, 32c, 32d, 32e) représentant des états de fonctionnement courants respectifs de l'appareil et un curseur (31) et, en réponse à l'utilisation du moyen de saisie par l'utilisateur, à déplacer ce curseur (31) de façon à sélectionner une desdites icônes (32a, 32b, 32c, 32d, 32e) et à changer la configuration de l'état de fonctionnement représenté par ladite icône (32a, 32b, 32c, 32d, 32e) sélectionnée.

3. Appareil selon la revendication 1 ou 2, dans lequel le moyen de commande est configuré de façon à faire afficher par l'affichage (30) une icône sélectionnée (32a, 32b, 32c, 32d, 32e) d'une manière qui dépend de l'état activé/désactivé de la fonction représentée par celle-ci.

4. Appareil selon la revendication 3, dans lequel le moyen de commande (20) est configuré de façon à faire afficher par l'affichage (30) l'icône (32a, 32b, 32c, 32d, 32e) sélectionnée de manière à ce que, lorsque la fonction représentée par celle-ci est dans l'état désactivé, l'icône sélectionnée (32a, 32b, 32c, 32d, 32e) vacille ou est légèrement estompée.

5. Appareil selon la revendication 3 ou 4, dans lequel le moyen de commande (20) est configuré de façon à faire afficher par l'affichage (30) l'icône (32a, 32b, 32c, 32d, 32e) sélectionnée de manière à ce que, lorsque la fonction représentée par celle-ci est dans l'état activé, l'icône sélectionnée (32a, 32b, 32c, 32d, 32e) est représentée en une image inversée.

6. Appareil selon l'une quelconque des revendications précédentes, comprenant une source de signaux d'image, dans lequel le moyen de commande (20) est configuré de façon à faire afficher par l'affichage (30) des images qui dépendent de signaux provenant de la source de signaux d'image derrière la ou chaque icône (32a, 32b, 32c, 32d, 32e).

7. Appareil selon la revendication 6, dans lequel la ou chaque icône (32a, 32b, 32c, 32d, 32e) est située dans la marge de l'affichage (30).

8. Appareil selon la revendication 1, dans lequel l'appareil de permutation (11, 11', 51, 51') est formé comme un bouton à cadran, de manière à ce que le premier signal soit émis lorsque le bouton à cadran est tourné, et le deuxième signal soit émis lorsque le bouton à cadran est poussé.

9. Appareil selon la revendication 1, dans lequel l'appareil de permutation (11,11', 51, 51') comprend :
un premier commutateur (11, 11') adapté de façon à émettre le premier signal ; et
un deuxième commutateur (51, 51') adapté de façon à émettre le deuxième signal.

10. Appareil selon la revendication 1, dans lequel :
l'appareil de permutation (11, 11', 51, 51') est disposé sur l'appareil électronique.

11. Appareil selon la revendication 1, dans lequel :
l'appareil de permutation (11, 11', 51, 51') est configuré comme un dispositif de commande à distance (50) adapté pour être utilisé avec l'appareil électronique.

12. Appareil selon la revendication 1, dans lequel :
le moyen de commande (20) est configuré de façon à changer la configuration de l'état de fonctionnement entre l'état activé et soit un état désactivé, soit un état automatique, en fonction du deuxième signal de sortie.

13. Procédé de configuration des fonctions d'un appareil électronique configurable par l'utilisateur qui comprend un affichage (30), un moyen de saisie par l'utilisateur et un moyen de commande (20), ce procédé étant **caractérisé par** les étapes consistant à :
faire afficher par l'affichage (30) une icône (32a, 32b, 32c, 32d, 32e) représentant un état de fonctionnement courant de l'appareil et un curseur (31) ;
répondre à l'utilisation du moyen de saisie par l'utilisateur, pour déplacer le curseur (31) afin de sélectionner ladite icône (32a, 32b, 32c, 32d, 32e), et à
changer la configuration de l'état de fonctionnement représenté par ladite icône (32a, 32b, 32c, 32d, 32e), et à
émettre, depuis le moyen de saisie par l'utilisateur, qui est un appareil de permutation (11, 11', 51, 51'), un premier signal pour déplacer le curseur et un deuxième signal pour changer la configuration de l'état de fonctionnement en permutant l'état de fonctionnement représenté par l'icône sélectionnée par le curseur ; et
dans lequel l'appareil comprend un capteur d'image pour enregistrer une vidéo et afficher le curseur (31) et l'icône, et pour sélectionner et changer une fonction représentée par l'icône, alors que la scène est capturée en même temps comme vidéo et que l'image enregistrée est affichée, et à
permuter la configuration en fonction du deuxième signal de sortie seulement, et
lorsque le curseur est situé sur une icône symbolique spécifique, le moyen de commande commandant le changement d'un état de fonctionnement de l'appareil par le deuxième signal seulement, et à
afficher une infobulle (34) comprenant une indication textuelle d'un titre et de l'état de fonctionnement représenté par l'icône.

14. Procédé selon la revendication 13, comprenant le fait de faire afficher par l'affichage (30) une icône sélectionnée (32a, 32b, 32c, 32d, 32e) d'une manière qui dépend de l'état activé/désactivé de la fonction représentée par celle-ci.

15. Procédé selon la revendication 13, comprenant :
le fait de faire afficher par l'affichage (30) une pluralité d'icônes (32a, 32b, 32c, 32d, 32e) représentant des états de fonctionnement respectifs de l'appareil et un curseur (31),
la réponse à l'utilisation du moyen de saisie par l'utilisateur, pour déplacer le curseur (31) afin de sélectionner une desdites icônes (32a, 32b, 32c, 32d, 32e), et
le changement de la configuration de l'état de fonctionnement représenté par ladite icône sélectionnée (32a, 32b, 32c, 32d, 32e).

16. Procédé selon l'une quelconque des revendications 13 à 15, comprenant :
le fait de faire afficher par l'affichage (30) l'icône sélectionnée (32a, 32b, 32c, 32d, 32e) de manière à ce que, lorsque l'état de fonctionnement représenté par celle-ci est dans l'état désactivé, l'icône sélectionnée (32a, 32b, 32c, 32d, 32e) vacille ou est légèrement estompée.

17. Procédé selon l'une quelconque des revendications 13 à 16, comprenant :
le fait de faire afficher par l'affichage (30) l'icône sélectionnée (32a, 32b, 32c, 32d, 32e) de manière à ce que, lorsque l'état de fonctionnement représenté par celle-ci est dans l'état activé, l'icône sélectionnée (32a, 32b, 32c, 32d, 32e) est représentée en une image inversée.

18. Procédé selon l'une quelconque des revendications 13 à 17, comprenant la génération de signaux d'image de source, et le fait de faire afficher par l'affichage (30) des images qui dépendent des signaux provenant de la source de signaux d'image derrière la ou chaque icône (32a, 32b, 32c, 32d, 32e).

19. Procédé selon la revendication 18, comprenant le positionnement de la ou de chaque icône (32a, 32b, 32c, 32d, 32e) dans la marge de l'affichage (30).

20. Procédé selon la revendication 13, dans lequel l'appareil de permutation (11, 11', 51, 51') est formé comme un bouton à cadran, et le procédé comprend l'émission du premier signal lorsque le bouton à cadran est tourné, et le deuxième signal est émis lorsque le bouton à cadran est poussé.

21. Procédé selon la revendication 13, comprenant :
le changement de la configuration de l'état de fonctionnement entre l'état activé et soit un état désactivé, soit un état automatique, en fonction du deuxième signal de sortie.
